# EUROPEAN PATENT APPLICATION

(11) **EP 4 513 735 A1**
(43) Date of publication of application: **26.02.2025**
(21) Application number: 23802481.4
(22) Date of filing: 10.03.2023
(51) Int. Cl.: H02M 1/32

(54) **POWER CONVERSION CIRCUIT AND POWER SUPPLY SYSTEM**

(30) Priority: 13.05.2022 CN 202210522155
(71) Applicant: Huawei Digital Power Technologies Co., Ltd., Shenzhen, Guangdong 518043 (CN)
(72) Inventor: HUANG, Zhuyong, Shenzhen, Guangdong 518043 (CN); WANG, Liang, Shenzhen, Guangdong 518043 (CN); LI, Chushan, Hangzhou, Zhejiang 310058 (CN); ZHU, Lin, Hangzhou, Zhejiang 310058 (CN); LI, Wuhua, Hangzhou, Zhejiang 310058 (CN)
(74) Representative: Maiwald GmbH
(86) International application number: PCT/CN2023/080881
(87) International publication number: WO 2023/216705

(57) **Abstract**

This application provides a power conversion circuit and a power supply system. The power conversion circuit includes N rectifiers and a control unit. Each rectifier includes two rectifier modules, and each rectifier module includes a plurality of diodes and a plurality of switching transistors. The control unit is configured to: when it is determined that a diode in a target rectifier module is short-circuited, turn off a switching transistor in the target rectifier module, adjust an output voltage of a target rectifier in which the target rectifier module is located to a first voltage, and adjust a sum of output voltages of rectifiers in the N rectifiers other than the target rectifier to a second voltage. After a diode in an internal rectifier is short-circuited, another switching transistor is reconfigured, so that the entire power conversion circuit can continue to operate stably. Compared with an external backup solution in the conventional technology, this solution can reduce costs and a volume of the power conversion circuit.

## Description

### CROSS-REFERENCE TO RELATED APPLICATIONS

This application claims priority to Chinese Patent Application No. 202210522155.6, filed with the China National Intellectual Property Administration on May 13, 2022 and entitled "POWER CONVERSION CIRCUIT AND POWER SUPPLY SYSTEM", which is incorporated herein by reference in its entirety.

### TECHNICAL FIELD

This application relates to the field of power electronics technologies, and in particular, to a power conversion circuit and a power supply system.

### BACKGROUND

A conventional uninterruptible power supply (uninterruptible power supply, UPS) has encountered bottlenecks in improving competitiveness in a power supply market due to high loss, high costs, and a large-capacity and low-frequency transformer in a system. A solid-state transformer (solid-State Transformer, SST) is a stationary electrical device that combines a high-frequency electric energy conversion technology according to an electromagnetic induction principle and a power electronics conversion technology, to convert electric energy of one power characteristic into electric energy of another power characteristic. The solid-state transformer (also referred to as a rectifier or a power conversion circuit) converts a medium-voltage alternating current voltage into a medium-voltage direct current voltage, and obtains a low-voltage direct current voltage after the medium-voltage direct current voltage is converted by a high-frequency isolated direct current-to-direct current circuit. A low-voltage inverter converts the low-voltage direct current voltage to a low-voltage alternating current voltage and sends the low-voltage alternating current voltage to a distribution network. This manner can isolate a medium-voltage power grid from a data center distribution network, provide high power quality, directly provide a low-voltage energy storage battery interface, and eliminate an industrial frequency transformer with low power density. Therefore, this solution is the first choice for a future medium-voltage UPS power supply system.

The medium-voltage UPS power supply system usually adopts a cascaded topology, and a power conversion circuit of the cascaded topology adopts a cascaded H-bridge structure. However, the medium-voltage UPS power supply system has many uncertain factors (faults). Consequently, stability is poor. In a solution in the conventional technology, maintenance for the structure against a fault mainly includes the following manners: an additional power module method, a special modulation method, and a common-mode voltage signal injection method.
1. Additional power module method: This method can be divided into cold backup and hot backup, and when the cascaded H-bridge structure is faulty, an additional module is mainly configured to ensure the cascaded H-bridge structure to operate normally. However, this method requires an additional hardware device, and costs are usually high.
2. Special modulation method: A zero-sequence voltage of a fundamental wave is injected, a three-phase output voltage reference is modified, and each switch signal is recalculated by using a specific harmonic elimination technology under a new voltage reference. Therefore, when the cascaded H-bridge structure is faulty, the cascaded H-bridge structure can operate normally. However, in this method, a faulty sub-module is directly bypassed, and effect is not good.
3. Common-mode voltage signal injection method: When an output reference of a faulty phase reaches an output limit value, a direct current offset signal is injected in a short time, and more levels are output by using a non-faulty switch in a faulty sub-module. However, because injected common-mode voltage components are small, this method can be used in few scenarios.

Therefore, based on problems existing in the foregoing methods, a new power conversion circuit urgently needs to be provided. After the power conversion circuit in the medium-voltage UPS power supply system is faulty, troubleshooting is performed on the power conversion circuit, to ensure stable operation of the medium-voltage UPS power supply system.

### SUMMARY

This application provides a power conversion circuit and a power supply system. After the power conversion circuit in a medium-voltage UPS power supply system is faulty, troubleshooting is performed on the power conversion circuit, to ensure stable operation of the power conversion circuit and the medium-voltage UPS power supply system.

According to a first aspect, this application provides a power conversion circuit. The power conversion circuit includes N rectifiers and a control unit, where N is a positive integer greater than or equal to 2.

Each rectifier includes two rectifier modules, and each rectifier module includes a plurality of diodes and a plurality of switching transistors. Input ends of the N rectifiers are connected in series, and output ends of the N rectifiers are connected in parallel. The rectifier is configured to: receive an alternating current provided by an alternating current power supply, and convert the alternating current provided by the alternating current power supply into a direct current voltage for output. The control unit is configured to: when it is determined that a diode in a target rectifier module is short-circuited, turn off a switching transistor in the target rectifier module, adjust an output voltage of a target rectifier in which the target rectifier module is located to a first voltage, and adjust a sum of output voltages of rectifiers in the N rectifiers other than the target rectifier to a second voltage. The first voltage is less than an output voltage of the target rectifier during normal operation, and the second voltage is greater than a sum of output voltages of other rectifiers during normal operation. Optionally, in this embodiment of this application, a type of the rectifier may be a Vienna (Vienna) rectifier, and the rectifier module in the rectifier may also be one phase Vienna rectifier module in a Vienna rectifier structure.

According to the power conversion circuit provided in this application, after a diode in an internal rectifier is short-circuited, another switching transistor is reconfigured, so that the entire power conversion circuit can continue to operate stably. Compared with an external backup solution in the conventional technology, this solution can reduce costs and a volume of the power conversion circuit.

For ease of control, in a possible implementation, the control unit is specifically configured to adjust an output voltage of each of the other rectifiers to a third voltage. The third voltage is greater than the output voltage of the target rectifier during normal operation.

In a possible implementation, each rectifier specifically includes a first rectifier module, a second rectifier module, a first output capacitor unit, and a second output capacitor unit. The first rectifier module includes a first diode, a second diode, a first switching transistor, and a second switching transistor. The second rectifier module includes a third diode, a fourth diode, a third switching transistor, and a fourth switching transistor. A second end of the first output capacitor unit is connected to a first end of the second output capacitor unit. An input positive end of the rectifier is connected to a positive end of the first diode, the input positive end of the rectifier is connected to a negative end of the second diode, and the input positive end of the rectifier is further connected to a first end of the first switching transistor. A third end of the first switching transistor is connected to a third end of the second switching transistor, a negative end of the first diode is connected to a first end of the first output capacitor unit, and a positive end of the second diode is connected to a second end of the second output capacitor unit. An input negative end of the rectifier is connected to a positive end of the third diode, the input negative end of the rectifier is connected to a negative end of the fourth diode, and the input negative end of the rectifier is further connected to a first end of the third switching transistor. A third end of the third switching transistor is connected to a third end of the fourth switching transistor, a negative end of the third diode is connected to the first end of the first output capacitor unit, and a positive end of the fourth diode is connected to the second end of the second output capacitor unit. A first end of the second switching transistor and a first end of the fourth switching transistor are connected to the second end of the first output capacitor unit.

In a possible implementation, the control unit is specifically configured to: when it is determined that the first diode in the target rectifier is short-circuited, turn off the first switching transistor and the second switching transistor; in a first time period, turn on the third switching transistor and the fourth switching transistor, adjust the output voltage of the target rectifier to a fourth voltage, and adjust the sum of the output voltages of the rectifiers other than the target rectifier to a fifth voltage; and in a second time period, turn off the third switching transistor and the fourth switching transistor, control the target rectifier not to output a voltage, and adjust the sum of the output voltages of the rectifiers other than the target rectifier to a total voltage output by the power conversion circuit during normal operation. The first time period is a time period in which a current flows from an input positive end to an input negative end of the target rectifier, and the second time period is a time period in which a current flows from the input negative end to the input positive end of the target rectifier. The fourth voltage is less than the output voltage of the target rectifier during normal operation, and a sum of the fourth voltage and the fifth voltage is equal to a total voltage output by the power conversion circuit during normal operation.

In a possible implementation, the control unit is specifically configured to: when it is determined that the second diode in the target rectifier is short-circuited, turn off the first switching transistor and the second switching transistor; in a first time period, turn off the third switching transistor and the fourth switching transistor, control the target rectifier not to output a voltage, and adjust the sum of the output voltages of the rectifiers other than the target rectifier to a total voltage output by the power conversion circuit during normal operation; and in a second time period, turn on the third switching transistor and the fourth switching transistor, adjust the output voltage of the target rectifier to a sixth voltage, and adjust the sum of the output voltages of the rectifiers other than the target rectifier to a seventh voltage. The first time period is a time period in which a current flows from an input positive end to an input negative end of the target rectifier, and the second time period is a time period in which a current flows from the input negative end to the input positive end of the target rectifier. The sixth voltage is greater than the output voltage of the target rectifier during normal operation, and a sum of the sixth voltage and the seventh voltage is equal to a total voltage output by the power conversion circuit during normal operation.

In a possible implementation, the control unit is specifically configured to: when it is determined that the third diode in the target rectifier is short-circuited, turn off the third switching transistor and the fourth switching transistor; in a first time period, turn off the first switching transistor and the second switching transistor, control the target rectifier not to output a voltage, and adjust the sum of the output voltages of the rectifiers other than the target rectifier to a total voltage output by the power conversion circuit during normal operation; and in a second time period, turn on the first switching transistor and the second switching transistor, adjust the output voltage of the target rectifier to an eighth voltage, and adjust the sum of the output voltages of the rectifiers other than the target rectifier to a ninth voltage. The first time period is a time period in which a current flows from an input positive end to an input negative end of the target rectifier, and the second time period is a time period in which a current flows from the input negative end to the input positive end of the target rectifier. The eighth voltage is greater than the output voltage of the target rectifier during normal operation, and a sum of the eighth voltage and the ninth voltage is equal to a total voltage output by the power conversion circuit during normal operation.

In a possible implementation, the control unit is specifically configured to: when it is determined that the fourth diode in the target rectifier is short-circuited, turn off the third switching transistor and the fourth switching transistor; in a first time period, turn on the first switching transistor and the second switching transistor, adjust the output voltage of the target rectifier to a tenth voltage, and adjust the sum of the output voltages of the rectifiers other than the target rectifier to an eleventh voltage; and in a second time period, turn off the first switching transistor and the second switching transistor, control the target rectifier not to output a voltage, and adjust the sum of the output voltages of the rectifiers other than the target rectifier to a total voltage output by the power conversion circuit during normal operation. The first time period is a time period in which a current flows from an input positive end to an input negative end of the target rectifier, and the second time period is a time period in which a current flows from the input negative end to the input positive end of the target rectifier. The tenth voltage is greater than the output voltage of the target rectifier during normal operation, and a sum of the tenth voltage and the eleventh voltage is equal to a total voltage output by the power conversion circuit during normal operation.

In a possible implementation, the rectifier in the foregoing aspect of this application is described by using a single-phase power application scenario as an example. When the power conversion circuit is configured to convert power of three-phase electrical power, when a power conversion circuit of one phase power is faulty, only an output voltage of a power conversion circuit in which a faulty diode is located needs to be adjusted, and an output voltage of a power conversion circuit corresponding to a non-faulty diode and a reference voltage value of a modulation wave do not need to be adjusted, to maintain operation stability of a cascaded power conversion circuit.

In a possible implementation, the control unit is further configured to reduce load impedance connected to the target rectifier. A value of load impedance connected to a rear end of the target rectifier is adjusted, to ensure voltage stability of the first output capacitor unit and the second output capacitor unit in the target rectifier.

In a possible implementation, between every two adjacent rectifiers, an input negative end of a rectifier is connected to an input positive end of a next rectifier, an input positive end of a first rectifier is connected to a power supply positive end of the alternating current power supply, and an input negative end of a last rectifier is connected to a power supply negative end of the alternating current power supply. Output positive ends of the rectifiers are connected to each other, and output negative ends of the rectifiers are connected to each other.

According to a second aspect, this application provides a power supply system. The power supply system includes N direct current-to-direct current DC-DC converters and the power conversion circuit according to the first aspect, and the N DC-DC converters are connected to N rectifiers in the power conversion circuit in a one-to-one correspondence. Each of the N DC-DC converters is configured to convert a first direct current voltage output by a correspondingly connected rectifier into a second direct current voltage. The first direct current voltage is greater than the second direct current voltage.

These aspects or other aspects of this application are more brief and comprehensible in descriptions of the following embodiments.

### BRIEF DESCRIPTION OF DRAWINGS

FIG. 1 is a diagram of a structure of a UPS power supply system based on a solid-state transformer;
FIG. 2 is a schematic diagram of a structure of a power conversion circuit;
FIG. 3 is a schematic diagram of a specific structure of a rectifier;
FIG. 4A is a schematic diagram of a current flow path in a first time period when a first diode is short-circuited;
FIG. 4B is a schematic diagram of a current flow path in a second time period when a first diode is short-circuited;
FIG. 4C is a schematic diagram 1 of a voltage time sequence of a target rectifier;
FIG. 5A is a schematic diagram of a current flow path in a first time period when a second diode is short-circuited;
FIG. 5B is a schematic diagram of a current flow path in a second time period when a second diode is short-circuited;
FIG. 5C is a schematic diagram 2 of a voltage time sequence of a target rectifier;
FIG. 6A is a schematic diagram of a current flow path in a first time period when a third diode is short-circuited;
FIG. 6B is a schematic diagram of a current flow path in a second time period when a third diode is short-circuited;
FIG. 6C is a schematic diagram 3 of a voltage time sequence of a target rectifier;
FIG. 7A is a schematic diagram of a current flow path in a first time period when a fourth diode is short-circuited;
FIG. 7B is a schematic diagram of a current flow path in a second time period when a fourth diode is short-circuited;
FIG. 7C is a schematic diagram 4 of a voltage time sequence of a target rectifier;
FIG. 8 is a schematic diagram of a cascaded topology structure of a rectifier; and
FIG. 9 is a schematic diagram of a structure of a power supply system.

### DESCRIPTION OF EMBODIMENTS

To make objectives, technical solutions, and advantages of this application clearer, the following further describes this application in detail with reference to accompanying drawings. However, example implementations can be implemented in a plurality of forms, which should not be construed as being limited to the implementations described herein. In contrast, these implementations are provided to make this application more comprehensive and complete, and concepts of the example implementations are comprehensively communicated to persons skilled in the art. Same reference numerals in the accompanying drawings represent same or similar structures, and repeated descriptions are omitted. Words for expressing positions and directions in this application are described by using the accompanying drawings as examples. However, changes may be made as required, and all changes shall fall within the protection scope of this application. The accompanying drawings in this application are merely used to show a relative position relationship, and do not represent a true scale.

To make objectives, technical solutions, and advantages of this application clearer, the following further describes this application in detail with reference to accompanying drawings. A specific operation method in a method embodiment may also be applied to an apparatus embodiment or a system embodiment. It should be noted that, in descriptions of this application, "at least one" refers to one or more, and "a plurality of" refers to two or more. In view of this, in embodiments of the present invention, "a plurality of" may also be understood as "at least two". The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects. In addition, it should be understood that in descriptions of this application, terms such as "first" and "second" are merely used for distinguishing and description, but should not be understood as indicating or implying relative importance, or should not be understood as indicating or implying a sequence.

It should be noted that, "connection" in embodiments of this application refers to an electrical connection, and a connection between two electrical elements may be a direct or indirect connection between the two electrical elements. For example, a connection between A and B may be a direct connection between A and B, or may be an indirect connection between A and B through one or more other electrical elements. For example, that A is connected to B may also be that A is directly connected to C, C is directly connected to B, A and B are connected through C.

In recent years, with continuous increase of power capacity, different application fields such as a data center, an energy storage system, and an electric vehicle charging station have increasing requirements for large-scale power centers. Due to high loss, high costs and existence of a large-capacity low-frequency transformer in a power supply system, competitiveness of a traditional uninterruptible power system has encountered bottlenecks in an uninterruptible power supply market. In addition, with gradual maturity of a medium-voltage power electronic switch component, a manner of using the medium-voltage power electronic switch component to perform medium-voltage power conversion has become a feasible solution with great performance improvement potential. Therefore, through application of a high-frequency transformer, a medium-voltage UPS solution in which a power conversion circuit converts a medium-voltage alternating current power supply input into a low-voltage direct current output is more suitable for various markets, and can adapt to increasing power capacity in these markets and requirements for low scale, weight and costs of a distribution system.

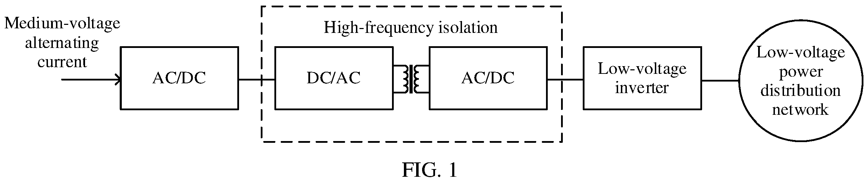

A solid-state transformer is a new isolated AC-DC-AC device based on a power electronic converter. FIG. 1 is a diagram of a structure of a UPS power supply system based on a solid-state transformer. In the structure shown in FIG. 1, a medium-voltage alternating current is first converted into a medium-voltage direct current by using an alternating current-to-direct current converter (alternating current-to-direct current converter, AC/DC) circuit, a low-voltage direct current is obtained by using a high-frequency isolated direct current-to-direct current converter (direct current-to-direct current converter, DC/DC) circuit, and then a low-voltage inverter is connected to transmit the direct current to a low-voltage alternating current power distribution network. This structure can isolate a medium-voltage power grid from a distribution network of the data center, and power quality is high. However, when the structure is faulty, it is difficult to effectively troubleshoot the fault in real time, and an existing fault recovery manner cannot meet a requirement in terms of costs control and an application scenario. Based on the problem existing in the foregoing method, a new power conversion circuit is urgently needed. After a power conversion circuit in a medium-voltage UPS power supply system is faulty, troubleshooting is performed on the power conversion circuit, to ensure stable operation of the medium-voltage UPS power supply system.

According to the power conversion circuit provided in this application, after a diode in an internal rectifier is short-circuited, another switching transistor is reconfigured, so that the entire power conversion circuit can continue to operate stably. Compared with an external backup solution in the conventional technology, this solution can reduce costs and a volume of the power circuit.

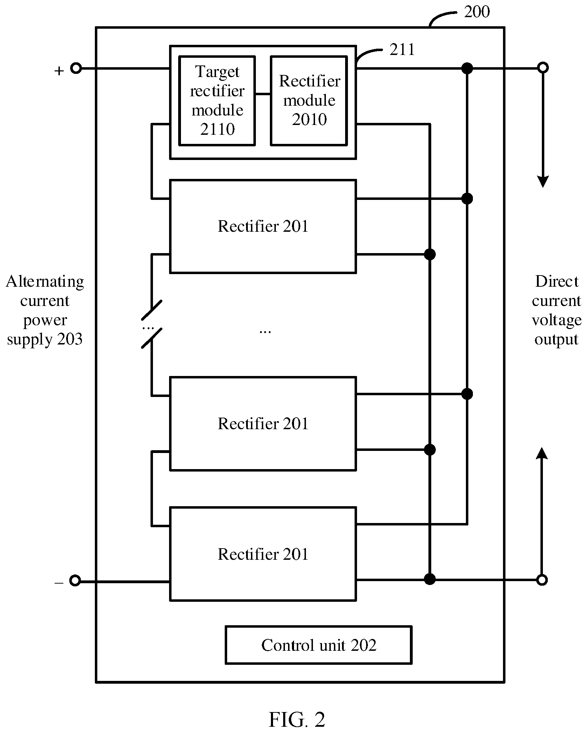

FIG. 2 is a schematic diagram of a structure of a power conversion circuit. A power conversion circuit 200 provided in this embodiment of this application may include N rectifiers 201 and a control unit 202, where N is a positive integer greater than or equal to 2.

Each rectifier 201 includes two rectifier modules 2010, and each rectifier module 2010 includes a plurality of diodes and a plurality of switching transistors. Input ends of the N rectifiers 201 are connected in series, and output ends of the N rectifiers 201 are connected in parallel.

The rectifier 201 is configured to: receive an alternating current provided by an alternating current power supply 203, and convert the alternating current provided by the alternating current power supply 203 into a direct current voltage for output.

The control unit 202 is configured to: when it is determined that a diode in a target rectifier module 2110 is short-circuited, turn off a switching transistor in the target rectifier module 2110, adjust an output voltage of a target rectifier 211 in which the target rectifier module 2110 is located to a first voltage, and adjust a sum of output voltages of rectifiers in the N rectifiers 201 other than the target rectifier 211 to a second voltage. The first voltage is less than an output voltage of the target rectifier 211 during normal operation, and the second voltage is greater than a sum of output voltages of the other rectifiers 201 during normal operation. It should be noted that in this embodiment of this application, because a voltage for comparison is an alternating current voltage, a voltage parameter for comparison may be an effective value of the voltage, a peak-to-peak value of the voltage, or the like. This is not limited herein.

A structure of the rectifier 201 in this application is evolved from a diode rectifier. For example, the rectifier 201 may be a Vienna rectifier structure. The structure includes two same single-phase rectifier modules, and each rectifier module includes two diodes and two switching transistors. The two opposite switching transistors may be equivalent to bidirectional switches to implement bidirectional flow of a current. A modulation method of the rectifier 201 is similar to that of a diode-clamped multilevel converter. In specific time, the rectifier 201 clamps a modulation wave to five levels separately, to reduce distortion of the current and reduce a quantity of switching operations.

It should be noted that the rectifier 201 in this application may be but is not limited to a specific structure described in the foregoing embodiment. A rectifier of another structure may also be used in embodiments of this application. This is not specifically limited herein.

The control unit 202 may be connected to the rectifier 201, to control the switching transistor in the rectifier 201.

Each rectifier 201 in the N rectifiers 201 uses a structure of input series output parallel. Specifically, the input ends of the N rectifiers 201 are connected in series, and the output ends of the N rectifiers 201 are connected in parallel. In this way, the alternating current provided by the alternating current power supply 203 is converted into the direct current voltage for output.

In a possible implementation, between every two adjacent rectifiers, an input negative end of a rectifier is connected to an input positive end of a next rectifier, an input positive end of a first rectifier is connected to a power supply positive end of the alternating current power supply, and an input negative end of a last rectifier is connected to a power supply negative end of the alternating current power supply. Output positive ends of the rectifiers are connected to each other, and output negative ends of the rectifiers are connected to each other.

The switching transistors in the rectifier 201 in embodiments of this application may be one or more of a plurality of types of switching transistors, such as a metal oxide semiconductor field effect transistor (metal oxide semiconductor field effect transistor, MOSFET), a bipolar junction transistor (bipolar junction transistor, BJT), an insulated gate bipolar transistor (insulated gate bipolar transistor, IGBT), a field effect transistor (field effect transistor, FET), a silicon carbide (SiC) power transistor, and a gallium nitride (GaN) power transistor. Examples are not enumerated in embodiments of this application. Each switching transistor may include a first electrode, a second electrode, and a control electrode. The control electrode is configured to control a switch to be turned on or turned off. When the switch is turned on, a current may be transmitted between the first electrode and the second electrode of the switch. Alternatively, when the switch is turned off, a current cannot be transmitted between the first electrode and the second electrode of the switch. The MOSFET is used as an example. The control electrode of the switch is a gate, the first electrode of the switch may be a source of the switching transistor, and the second electrode may be a drain of the switching transistor; or the first electrode may be the drain of the switch, and the second electrode may be the source of the switch. Both a first end of a main power tube and a first end of an auxiliary power tube may be a source (source), or may be a drain (drain). When the first end is the source, the second end is the drain, and when the first end is the drain, the second end is the source.

The control unit 202 in this embodiment of this application may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The control unit 202 may implement or execute various example logical blocks, modules, and circuits described with reference to content disclosed in this application. Alternatively, the control unit 202 may be a combination for implementing a calculation function, for example, a combination of one or more microprocessors, a combination of the DSP and a microprocessor, or the like. The control unit 202 may also include a plurality of control subunits, and each control subunit is configured to control a corresponding rectifier 201. This is not specifically limited herein.

The control unit 202 determines a specific control policy by monitoring in real time whether a diode in a rectifier module in each rectifier 201 is short-circuited, to ensure that the entire power conversion circuit 200 can continue to operate normally and smoothly. When it is determined that the diode in the target rectifier module 2110 is short-circuited, the switching transistor in the rectifier module corresponding to the diode in which the fault is located is first turned off, that is, the switching transistor in the target rectifier module 2110 is turned off, and a switching status of a switching transistor on the other side is adjusted, to maintain normal and stable operation of the power conversion circuit 200. A specific control policy is related to a current direction of the alternating current and a fault position of the diode. This is described in detail in the following embodiments, and details are not described herein again. Because the diode in the target rectifier module 2110 is faulty, it is difficult for the target rectifier 211 in which the target rectifier module 2110 is located to output the output voltage of the target rectifier during normal operation. The switching status of the switching transistor in the rectifier on the other side of the target rectifier module 2110 is adjusted, so that the output voltage of the target rectifier 211 is reduced to the first voltage.

The first voltage is less than the output voltage of the target rectifier 211 during normal operation. In different current directions, values of the first voltage are also different because positions of short-circuited diodes are different. For example, the first voltage may be 0, or the first voltage may be half of the output voltage of the rectifier during normal operation. It should be noted that the first voltage is limited only below the output voltage of the rectifier during normal operation, and a specific value is not limited.

After the output voltage of the target rectifier 211 is reduced to the first voltage, a part obtained by subtracting the first voltage from the output voltage of the target rectifier 211 during normal operation needs to be compensated for. Therefore, the sum of voltages output by other rectifiers may be increased to compensate for the reduced part of the output voltage the target rectifier 211. Therefore, normal and stable operation of the power conversion circuit 200 can be maintained. Specifically, the sum of the output voltages of the rectifiers in the N rectifiers 201 other than the target rectifier 211 is adjusted to the second voltage.

The second voltage is greater than the sum of the output voltages of the other rectifiers 201 during normal operation. In different current directions, values of the second voltage are also different because connection positions of short-circuited diodes are different. For example, the second voltage may be equal to an output voltage of the entire power conversion circuit 200 during normal operation. It should be noted that the second voltage is limited only above the sum of the output voltages of the other rectifiers 201 during normal operation, and a specific value is not limited.

A quantity of switching transistors in the rectifier 201 may be related to an alternating current voltage of the alternating current power supply 203 and a voltage withstand capability of the switching transistor. When a quantity of the switch components in the rectifier 201 is specifically designed, if an input alternating current voltage is large and a voltage withstand capability of the switch component is low, a plurality of switching transistors may be connected in series to divide the alternating current voltage of the alternating current power supply 203, to ensure that a switching transistor with a low voltage withstand capability can also operate normally.

In addition, only the sum of the output voltages of the rectifiers other than the target rectifier 211 is limited in this embodiment of this application, and an output voltage of each of the other rectifiers is not limited separately. In other words, in a same power conversion circuit 200, output voltages of rectifiers may be the same or different. The output voltage of each of the other rectifiers is also related to a parameter of an internal component of the rectifier. This is not limited herein.

For ease of control, in a possible implementation, the control unit 202 may adjust the output voltage of each of the other rectifiers to a third voltage. The third voltage is greater than the output voltage of the target rectifier during normal operation. The sum of the output voltages of the other rectifiers is N-1 times the third voltage, and the N-1 times the third voltage may be the second voltage.

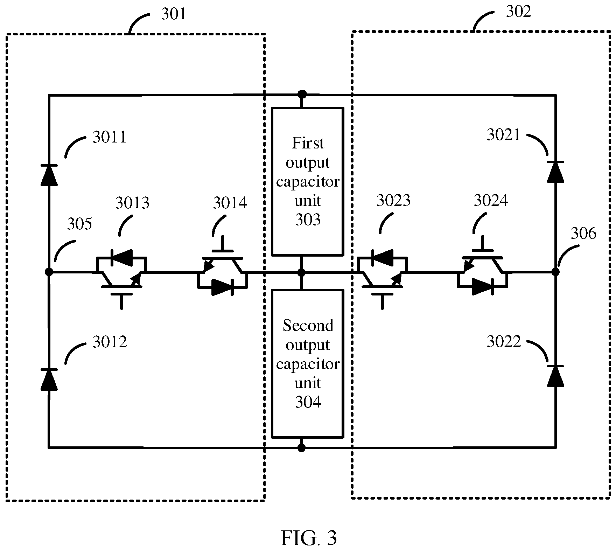

FIG. 3 is a schematic diagram of a specific structure of a rectifier according to this application. A structure of each rectifier may be specifically: a first rectifier module 301, a second rectifier module 302, a first output capacitor unit 303, and a second output capacitor unit 304. The first rectifier module 301 includes a first diode 3011, a second diode 3012, a first switching transistor 3013, and a second switching transistor 3014. The second rectifier module 302 includes a third diode 3021, a fourth diode 3022, a third switching transistor 3023, and a fourth switching transistor 3024. A second end of the first output capacitor unit 303 is connected to a first end of the second output capacitor unit 304. An input positive end 305 of the rectifier is connected to the positive end of the first diode 3011, the input positive end 305 of the rectifier is connected to a negative end of the second diode 3012, and the input positive end 305 of the rectifier is further connected to a first end of the first switching transistor 3013. A third end of the first switching transistor 3013 is connected to a third end of the second switching transistor 3014, and a negative end of the first diode 3011 is connected to a first end of the first output capacitor unit 303. A positive end of the second diode 3012 is connected to a second end of the second output capacitor unit 304.

An input negative end 306 of the rectifier is connected to a positive end of the third diode 3021, the input negative end 306 of the rectifier is connected to a negative end of the fourth diode 3022, and the input negative end 306 of the rectifier is further connected to a first end of the third switching transistor 3023. A third end of the third switching transistor 3023 is connected to a third end of the fourth switching transistor 3024, and a negative end of the third diode 3021 is connected to the first end of the first output capacitor unit 303. A positive end of the fourth diode 3022 is connected to the second end of the second output capacitor unit 304.

A first end of the second switching transistor 3014 and a first end of the fourth switching transistor 3024 are connected to the second end of the first output capacitor unit 303, or the first end of the second output capacitor unit 304.

The first output capacitor unit 303 and the second output capacitor unit 304 may separately include at least one capacitor, and a quantity of capacitors disposed in each output capacitor unit is related to a parameter of the capacitor and an input voltage of the alternating current power supply 203. For example, in an application scenario in which a voltage peak-to-peak value Vpp of the alternating current power supply 203 is 1150 V and an output-side direct current voltage is 650 V, an electric potential on each output capacitor unit is 325 V. Considering a voltage withstand capability and costs of the capacitor, two serially connected capacitors may be disposed in the first output capacitor unit 303 and the second output capacitor unit 304 separately, to reduce costs.

Based on the structure of the rectifier shown in FIG. 3, in a same rectifier, there are four fault cases at different positions (a case in which two or more diodes in a rectifier are short-circuited at the same time is rare). The control unit 202 has different control policies corresponding to fault cases at different positions.

### Fault control policy for a position 1 (the first diode 3011 is short-circuited):

When it is determined that the first diode 3011 is short-circuited, the first switching transistor 3013 and the second switching transistor 3014 are turned off. In a first time period, the third switching transistor 3023 and the fourth switching transistor 3024 are turned on, the output voltage of the target rectifier 211 is adjusted to a fourth voltage, and the sum of the output voltages of the rectifiers other than the target rectifier 211 is adjusted to a fifth voltage. In a second time period, the third switching transistor 3023 and the fourth switching transistor 3024 are turned off, the target rectifier 211 is controlled not to output a voltage, and the sum of the output voltages of the rectifiers other than the target rectifier 211 is adjusted to a total voltage output by the power conversion circuit 200 during normal operation.

The first time period is a time period in which a current flows from an input positive end to an input negative end of the target rectifier 211, the second time period is a time period in which a current flows from the input negative end to the input positive end of the target rectifier 211, the fourth voltage is less than the output voltage of the target rectifier 211 during normal operation, and a sum of the fourth voltage and the fifth voltage is equal to the total voltage output by the power conversion circuit 200 during normal operation.

For example, the first output capacitor unit 303 and the second output capacitor unit 304 include two capacitors. If a voltage on each capacitor is E/2, there are five possible cases of voltages that can be output by each rectifier module: 2E, E, 0, -E, and -2E. The following embodiments are all described based on this example.

In the first time period (the current flows from the input positive end to the input negative end), the control unit 202 sends a high-level pulse signal to second ends (that is, control electrodes) of the third switching transistor 3023 and the fourth switching transistor 3024, so that the third switching transistor 3023 and the fourth switching transistor 3024 remain on, a voltage reference value of the output capacitor unit corresponding to the target rectifier module is adjusted to half of an original voltage, the output voltage of the target rectifier 211 is adjusted to the fourth voltage, and the sum of the output voltages of the rectifiers other than the target rectifier 211 is adjusted to the fifth voltage. For example, when a maximum voltage that can be output by the rectifier module is 2E, the fourth voltage may be E, and the fifth voltage is 2E*(N-1)+E. In this case, the sum of the fourth voltage and the fifth voltage is 2E*N.

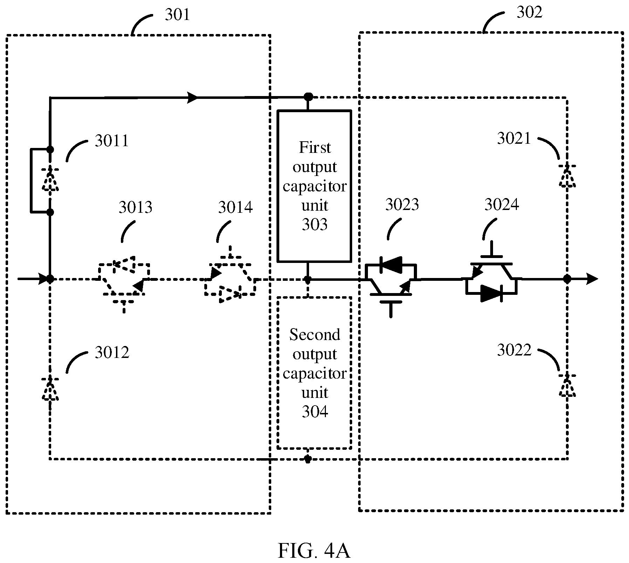

FIG. 4A is a schematic diagram of a current flow path in a first time period when a first diode is short-circuited. In the first time period, the third switching transistor 3023 and the fourth switching transistor 3024 are controlled to be turned on, so that the short-circuited first diode 3011, the first output capacitor unit 303, the third switching transistor 3023, and the fourth switching transistor 3024 form a path.

In the second time period (the current flows from the input negative end to the input positive end), the control unit 202 does not send a pulse signal to the second ends of the third switching transistor 3023 and the fourth switching transistor 3024, so that the third switching transistor 3023 and the fourth switching transistor 3024 remain off. The voltage reference value of the output capacitor unit corresponding to the target rectifier module is adjusted to half of the original voltage, the target rectifier is controlled not to output a voltage, and the sum of the output voltages of the rectifiers other than the target rectifier 211 is adjusted to the total voltage output by the power conversion circuit 200 during normal operation.

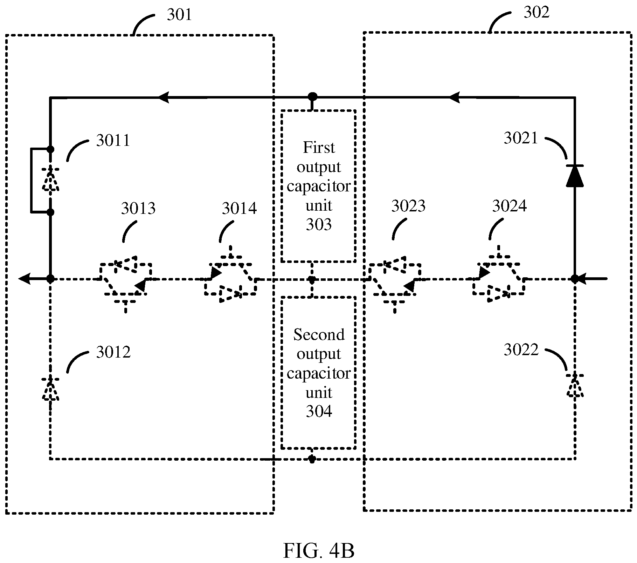

FIG. 4B is a schematic diagram of a current flow path in a second time period when a first diode is short-circuited. In the second time period, the third switching transistor 3023 and the fourth switching transistor 3024 are controlled to be turned off, so that the short-circuited first diode 3011 and the third diode 3021 form a path.

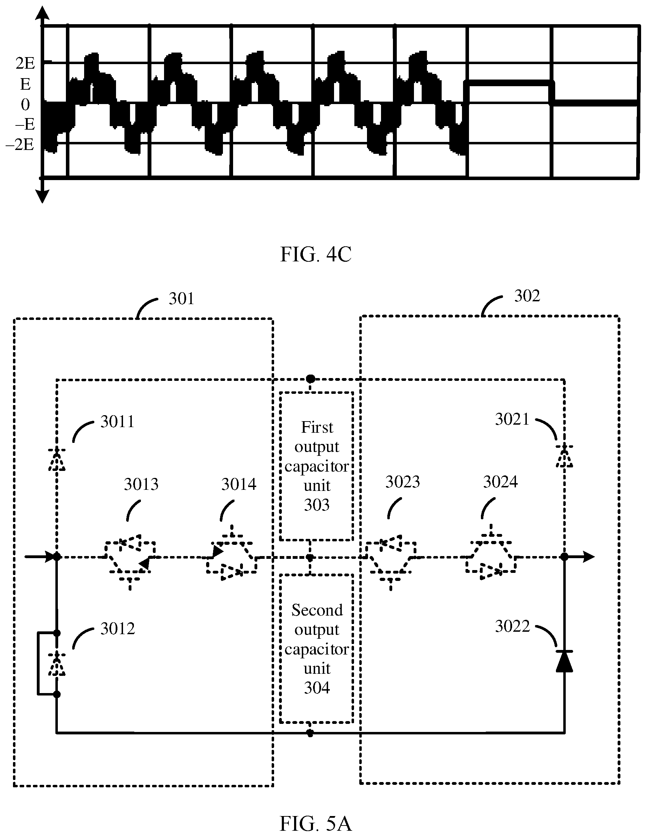

FIG. 4C is a schematic diagram 1 of a voltage time sequence of a target rectifier. An output voltage of a single rectifier module changes from an original five-level modulation voltage to a positive voltage (the fourth voltage) in the first time period, and a zero voltage is output in the second time period.

It should be noted that a manner in which the control unit 202 is configured to control the power conversion circuit 200 to operate in different states may be a cyclic execution manner of "the first time period to the second time period...". A start time period of a specific cycle is not specifically limited. The first time period may be used as the start time period, or the second time period may be used as the start time period. Details are not described in the following embodiments.

### Fault control policy for a position 2 (the second diode 3012 is short-circuited):

When it is determined that the second diode 3012 is short-circuited, the first switching transistor 3013 and the second switching transistor 3014 are turned off. In a first time period, the third switching transistor 3023 and the fourth switching transistor 3024 are turned off, the target rectifier 211 is controlled not to output a voltage, and the sum of the output voltages of the rectifiers other than the target rectifier 211 is adjusted to a total voltage output by the power conversion circuit 200 during normal operation. In a second time period, the third switching transistor 3023 and the fourth switching transistor 3024 are turned on, the output voltage of the target rectifier 211 is adjusted to a sixth voltage, and the sum of the output voltages of the rectifiers other than the target rectifier 211 is adjusted to a seventh voltage. The sixth voltage is greater than the output voltage of the target rectifier during normal operation, and a sum of the sixth voltage and the seventh voltage is equal to the total voltage output by the power conversion circuit during normal operation.

In the first time period, the control unit 202 does not send a pulse signal to the second ends of the third switching transistor 3023 and the fourth switching transistor 3024, so that the third switching transistor 3023 and the fourth switching transistor 3024 remain off. The voltage reference value of the output capacitor unit corresponding to the target rectifier module is adjusted to half of the original voltage, the target rectifier is controlled not to output a voltage, and the sum of the output voltages of the rectifiers other than the target rectifier 211 is adjusted to the total voltage output by the power conversion circuit 200 during normal operation.

FIG. 5A is a schematic diagram of a current flow path in a first time period when a second diode is short-circuited. In the first time period, the third switching transistor 3023 and the fourth switching transistor 3024 are controlled to be turned off, so that the short-circuited second diode 3012 and the fourth diode 3022 form a path.

In the second time period, the control unit 202 does not send a pulse signal to the second ends of the third switching transistor 3023 and the fourth switching transistor 3024, so that the third switching transistor 3023 and the fourth switching transistor 3024 remain on. The voltage reference value of the output capacitor unit corresponding to the target rectifier module is adjusted to half of the original voltage, the output voltage of the target rectifier 211 is adjusted to the sixth voltage, and the sum of the output voltages of the rectifiers other than the target rectifier 211 is adjusted to the seventh voltage. For example, when a maximum voltage that can be output by the rectifier module is 2E, the sixth voltage may be -E, and the seventh voltage is -[2E*(N-1)+E]. In this case, the sum of the sixth voltage and the seventh voltage is -2E*N.

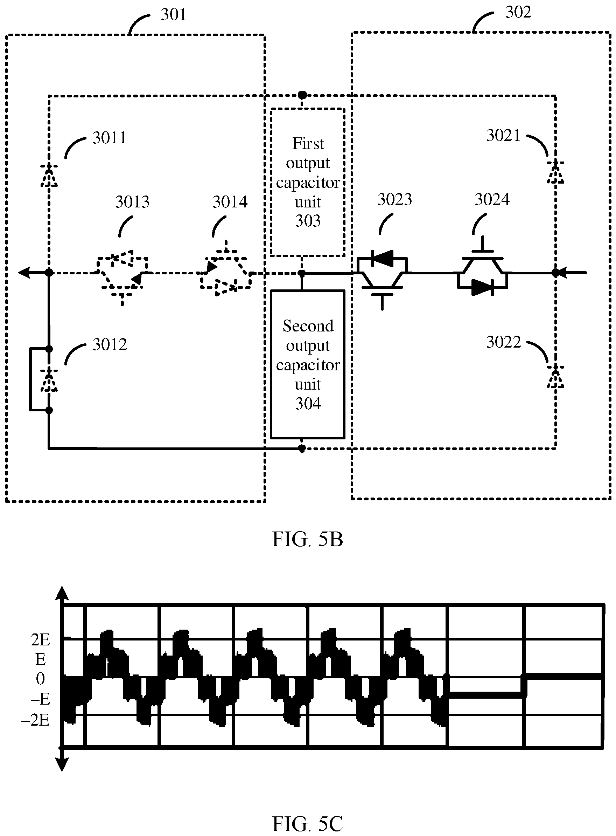

FIG. 5B is a schematic diagram of a current flow path in a second time period when a second diode is short-circuited. In the second time period, the third switching transistor 3023 and the fourth switching transistor 3024 are controlled to be turned on, so that the short-circuited second diode 3012, the second output capacitor unit 304, the third switching transistor 3023, and the fourth switching transistor 3024 form a path.

FIG. 5C is a schematic diagram 2 of a voltage time sequence of a target rectifier. An output voltage of a single rectifier module changes from an original five-level modulation voltage to a negative voltage (the sixth voltage) in the first time period, and a zero voltage is output in the second time period.

### Fault control policy for a position 3 (the third diode 3021 is short-circuited):

When it is determined that the third diode 3021 is short-circuited, the third switching transistor 3023 and the fourth switching transistor 3024 are turned off. In a first time period, the first switching transistor 3013 and the second switching transistor 3014 are turned off, the target rectifier 211 is controlled not to output a voltage, and the sum of the output voltages of the rectifiers other than the target rectifier 211 is adjusted to a total voltage output by the power conversion circuit 200 during normal operation. In a second time period, the first switching transistor 3013 and the second switching transistor 3014 are turned on, the output voltage of the target rectifier 211 is adjusted to an eighth voltage, and the sum of the output voltages of the rectifiers other than the target rectifier 211 is adjusted to a ninth voltage. The eighth voltage is greater than the output voltage of the target rectifier during normal operation, and a sum of the eighth voltage and the ninth voltage is equal to the total voltage output by the power conversion circuit during normal operation.

In the first time period, the control unit 202 does not send a pulse signal to the second ends of the first switching transistor 3013 and the second switching transistor 3014, so that the third switching transistor 3023 and the fourth switching transistor 3024 remain off. The voltage reference value of the output capacitor unit corresponding to the target rectifier module is adjusted to half of the original voltage, the target rectifier 211 is controlled not to output a voltage, and the sum of the output voltages of the rectifiers other than the target rectifier 211 is adjusted to the total voltage output by the power conversion circuit 200 during normal operation.

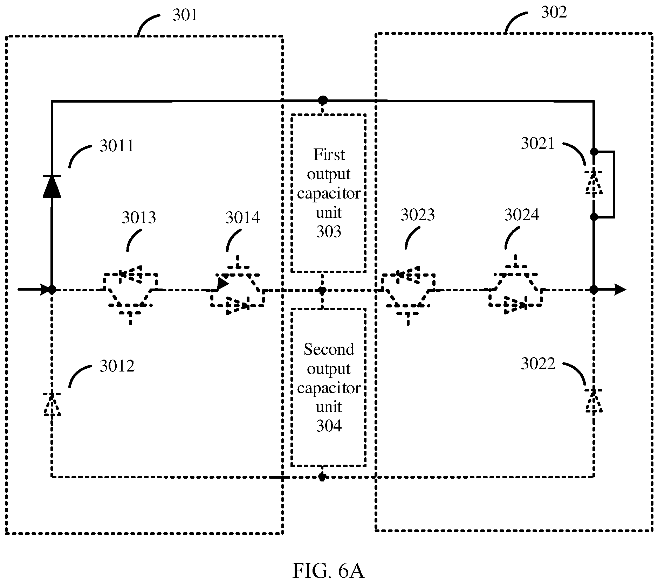

FIG. 6A is a schematic diagram of a current flow path in a first time period when a third diode is short-circuited. In the first time period, the first switching transistor 3013 and the second switching transistor 3014 are controlled to be turned off, so that the short-circuited first diode 3011 and the third diode 3022 form a path.

In the second time period, the control unit 202 does not send a pulse signal to the second ends of the third switching transistor 3023 and the fourth switching transistor 3024, so that the third switching transistor 3023 and the fourth switching transistor 3024 remain on. The voltage reference value of the output capacitor unit corresponding to the target rectifier module is adjusted to half of the original voltage, the output voltage of the target rectifier 211 is adjusted to the eighth voltage, and the sum of the output voltages of the rectifiers other than the target rectifier 211 is adjusted to the ninth voltage. For example, when a maximum voltage that can be output by the rectifier module is 2E, the eighth voltage may be -E, and the ninth voltage is -[2E*(N-1)+E]. In this case, the sum of the eighth voltage and the ninth voltage is -2E*N.

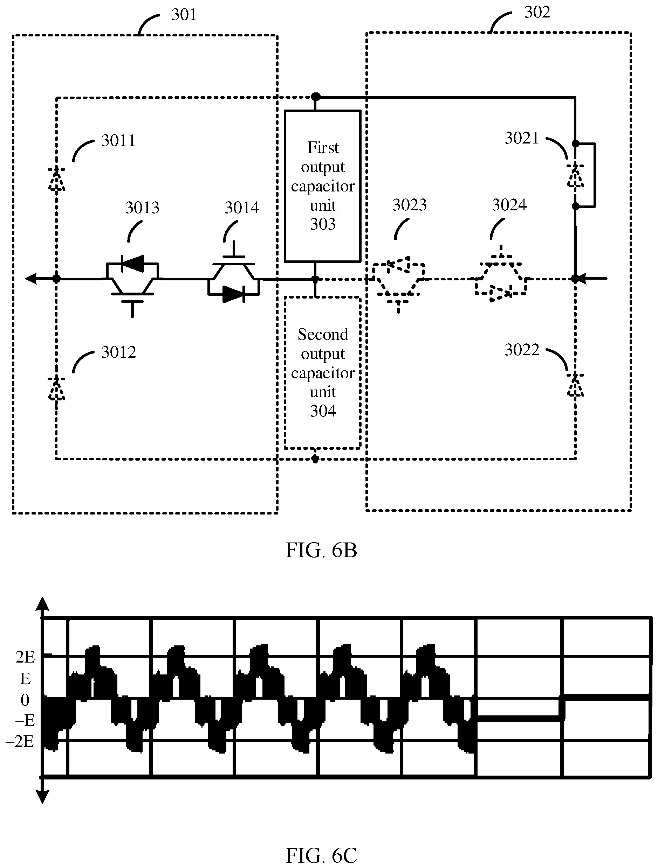

FIG. 6B is a schematic diagram of a current flow path in a second time period when a third diode is short-circuited. In the second time period, the first switching transistor 3013 and the second switching transistor 3014 are controlled to be turned on, so that the short-circuited third diode 3021, the first output capacitor unit 303, the first switching transistor 3013, and the second switching transistor 3014 form a path.

FIG. 6C is a schematic diagram 3 of a voltage time sequence of a target rectifier. An output voltage of a single rectifier module changes from an original five-level modulation voltage to a negative voltage (the eighth voltage) in the first time period, and a zero voltage is output in the second time period.

### Fault control policy for a position 4 (the fourth diode 3022 is short-circuited):

When it is determined that the fourth diode 3022 is short-circuited, the third switching transistor 3023 and the fourth switching transistor 3024 are turned off. In a first time period, the first switching transistor 3013 and the second switching transistor 3014 are turned on, the output voltage of the target rectifier 211 is adjusted to a tenth voltage, and the sum of the output voltages of the rectifiers other than the target rectifier 211 is adjusted to an eleventh voltage. In a second time period, the first switching transistor 3013 and the second switching transistor 3014 are turned off, the target rectifier 211 is controlled not to output a voltage, and the sum of the output voltages of the rectifiers other than the target rectifier is adjusted to a total voltage output by the power conversion circuit 200 during normal operation. The tenth voltage is greater than the output voltage of the target rectifier 211 during normal operation, and a sum of the tenth voltage and the eleventh voltage is equal to the total voltage output by the power conversion circuit 200 during normal operation.

In the first time period, the control unit 202 sends a high-level pulse signal to the second ends of the first switching transistor 3013 and the second switching transistor 3014, so that the first switching transistor 3013 and the second switching transistor 3014 remain on. The voltage reference value of the output capacitor unit corresponding to the target rectifier module is adjusted to half of the original voltage, the output voltage of the target rectifier 211 is adjusted to the tenth voltage, and the sum of the output voltages of the rectifiers other than the target rectifier 211 is adjusted to the eleventh voltage. For example, when a maximum voltage that can be output by the rectifier module is 2E, the tenth voltage may be E, and the eleventh voltage is 2E*(N-1)+E. In this case, the sum of the tenth voltage and the eleventh voltage is 2E*N.

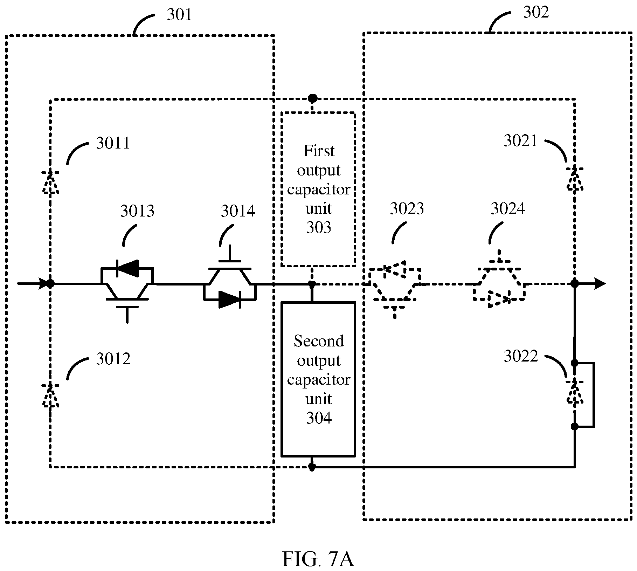

FIG. 7A is a schematic diagram of a current flow path in a first time period when a fourth diode is short-circuited. In the first time period, the first switching transistor 3013 and the second switching transistor 3014 are controlled to be turned on, so that the short-circuited fourth diode 3011, the second output capacitor unit 304, the first switching transistor 3013, and the second switching transistor 3014 form a path.

In the second time period, the control unit 202 does not send a pulse signal to the second ends of the first switching transistor 3013 and the second switching transistor 3014, so that the first switching transistor 3013 and the second switching transistor 3014 remain off. The voltage reference value of the output capacitor unit corresponding to the target rectifier module is adjusted to half of the original voltage, the target rectifier is controlled not to output a voltage, and the sum of the output voltages of the rectifiers other than the target rectifier 211 is adjusted to the total voltage output by the power conversion circuit 200 during normal operation.

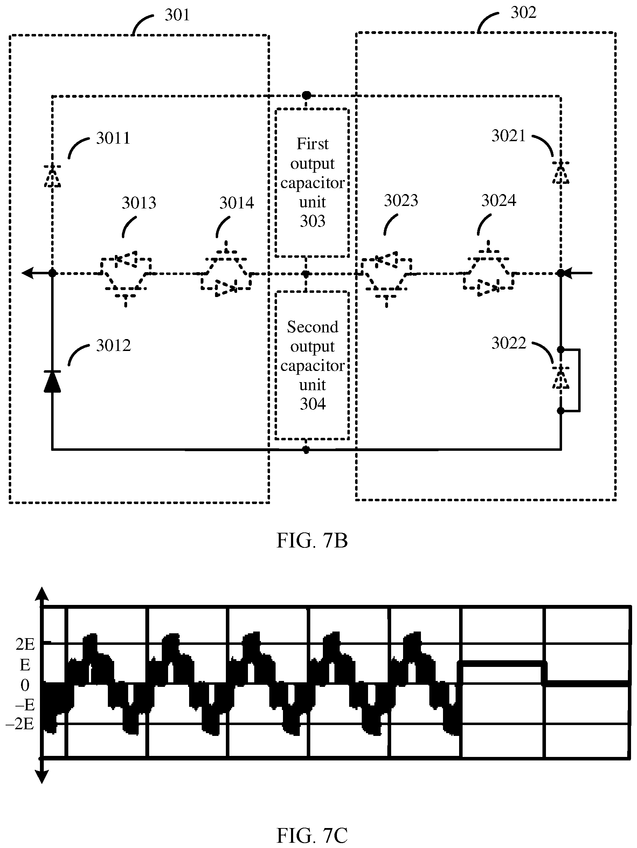

FIG. 7B is a schematic diagram of a current flow path in a second time period when a fourth diode is short-circuited. In the second time period, the first switching transistor 3013 and the second switching transistor 3014 are controlled to be turned off, so that the short-circuited second diode 3012 and the fourth diode 3022 form a path.

FIG. 7C is a schematic diagram 4 of a voltage time sequence of a target rectifier. An output voltage of a single rectifier module changes from an original five-level modulation voltage to a positive voltage (the tenth voltage) in the first time period, and a zero voltage is output in the second time period.

According to the power conversion circuit 200 provided in the foregoing embodiments, after a diode is short-circuited, the power conversion circuit 200 is almost not affected, normal and stable operation can be ensured, and waveform distortion of a voltage output by the power conversion circuit 200 is small and quality is good.

In a possible implementation, the control unit 202 is further configured to reduce load impedance connected to the target rectifier 211. A value of load impedance connected to a rear end of the target rectifier 211 is adjusted, to ensure voltage stability of the first output capacitor unit 303 and the second output capacitor unit 304 in the target rectifier 211.

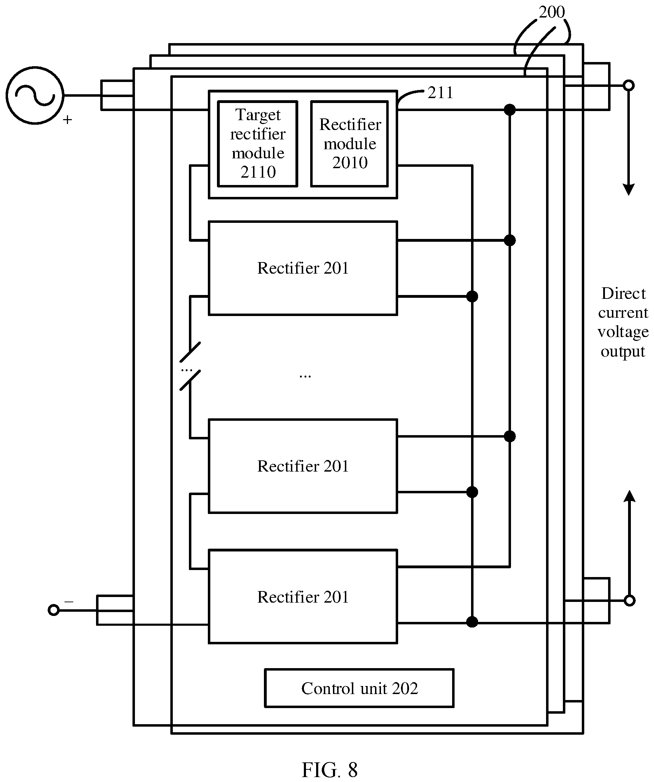

It should be noted that the rectifier in embodiments of this application is described by using a single-phase electrical application scenario as an example. When the power conversion circuit 200 is configured to convert power of three-phase electrical power, refer to FIG. 8. FIG. 8 is a schematic diagram of a cascaded topology structure of a rectifier. When a power conversion circuit 200 of one phase is faulty, only an output voltage of the power conversion circuit 200 in which the faulty diode is located needs to be adjusted, and an output voltage of a power conversion circuit 200 corresponding to a non-faulty diode and a reference voltage value of a modulation wave do not need to be adjusted, to implement phase voltage balance, and maintain operation stability of a cascaded power conversion circuit 200.

According to the power conversion circuit provided in embodiments of this application, when a diode in the power conversion circuit is short-circuited, another component not in the target rectifier module is reconfigured by using a control unit, to ensure that the power conversion circuit can continue to operate stably. In addition, equivalent impedance connected to a next-level conversion circuit is controlled to be reduced. The capacitor voltage can be stabilized, and controllability of the power conversion circuit can be ensured by supplying power by using the capacitor. Therefore, compared with an external backup solution in the conventional technology, this solution can reduce costs and a volume of the power circuit.

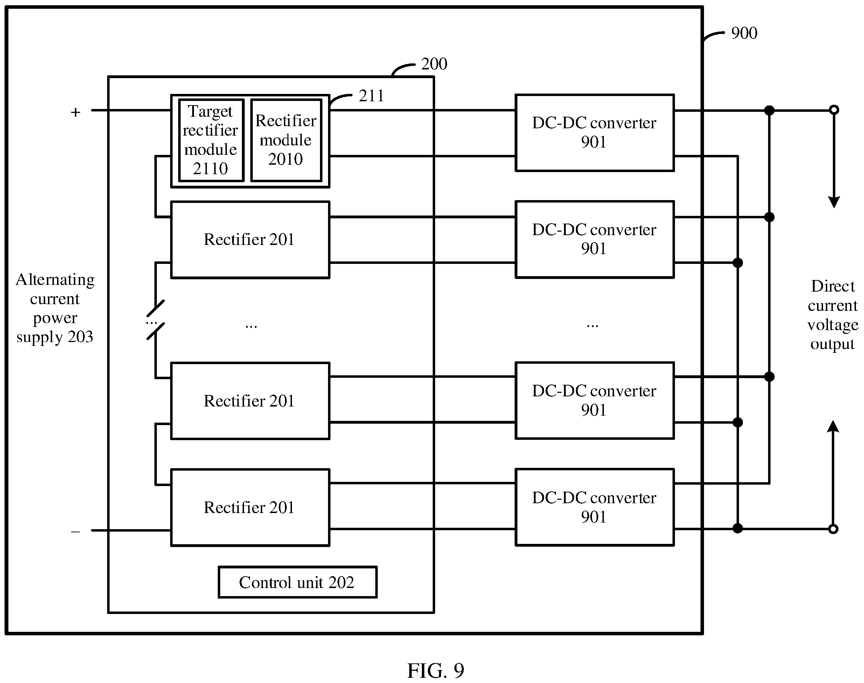

Based on a same invention concept, this application further provides a power supply system. FIG. 9 is a schematic diagram of a structure of a power supply system. The power supply system 900 includes N direct current-to-direct current DC-DC converters 901 and the power conversion circuit 200 in the foregoing embodiments. The N DC-DC converters 901 are connected to N rectifiers 201 in the power conversion circuit 200 in a one-to-one correspondence. Each of the N DC-DC converters 901 is configured to convert a first direct current voltage output by a correspondingly connected rectifier 201 into a second direct current voltage. The first direct current voltage is greater than the second direct current voltage.

Although some preferred embodiments of this application have been described, persons skilled in the art can make changes and modifications to these embodiments once they learn the basic inventive concept. Therefore, the following claims are intended to be construed as to cover the preferred embodiments and all changes and modifications falling within the scope of this application.

Apparently, persons skilled in the art may make various modifications and variations to embodiments of this application without departing from the scope of embodiments of this application. This application is intended to cover these modifications and variations provided that they fall within the scope of protection defined by the following claims and their equivalent technologies.

## Claims

1. A power conversion circuit, wherein the power conversion circuit comprises N rectifiers and a control unit, and N is a positive integer greater than or equal to 2;
each rectifier comprises two rectifier modules, each rectifier module comprises a plurality of diodes and a plurality of switching transistors, input ends of the N rectifiers are connected in series, and output ends of the N rectifiers are connected in parallel;
the rectifier is configured to: receive an alternating current provided by an alternating current power supply, and convert the alternating current provided by the alternating current power supply into a direct current voltage for output; and
the control unit is configured to: when it is determined that a diode in a target rectifier module is short-circuited, turn off a switching transistor in the target rectifier module, adjust an output voltage of a target rectifier in which the target rectifier module is located to a first voltage, and adjust a sum of output voltages of rectifiers in the N rectifiers other than the target rectifier to a second voltage, wherein the first voltage is less than an output voltage of the target rectifier during normal operation, and the second voltage is greater than a sum of output voltages of the other rectifiers during normal operation.

2. The circuit according to claim 1, wherein the control unit is specifically configured to adjust an output voltage of each of the other rectifiers to a third voltage, and the third voltage is greater than the output voltage of the target rectifier during normal operation.

3. The circuit according to claim 1 or 2, wherein each rectifier specifically comprises:
a first rectifier module, a second rectifier module, a first output capacitor unit, and a second output capacitor unit, wherein
the first rectifier module comprises: a first diode, a second diode, a first switching transistor, and a second switching transistor;
the second rectifier module comprises: a third diode, a fourth diode, a third switching transistor, and a fourth switching transistor;
a second end of the first output capacitor unit is connected to a first end of the second output capacitor unit;
an input positive end of the rectifier is connected to a positive end of the first diode, the input positive end of the rectifier is connected to a negative end of the second diode, the input positive end of the rectifier is further connected to a first end of the first switching transistor, a third end of the first switching transistor is connected to a third end of the second switching transistor, a negative end of the first diode is connected to a first end of the first output capacitor unit, and a positive end of the second diode is connected to a second end of the second output capacitor unit;
an input negative end of the rectifier is connected to a positive end of the third diode, the input negative end of the rectifier is connected to a negative end of the fourth diode, the input negative end of the rectifier is further connected to a first end of the third switching transistor, a third end of the third switching transistor is connected to a third end of the fourth switching transistor, a negative end of the third diode is connected to the first end of the first output capacitor unit, and a positive end of the fourth diode is connected to the second end of the second output capacitor unit; and
a first end of the second switching transistor and a first end of the fourth switching transistor are connected to the second end of the first output capacitor unit.

4. The circuit according to claim 3, wherein the control unit is specifically configured to:
when it is determined that the first diode in the target rectifier is short-circuited, turn off the first switching transistor and the second switching transistor; in a first time period, turn on the third switching transistor and the fourth switching transistor, adjust the output voltage of the target rectifier to a fourth voltage, and adjust the sum of the output voltages of the rectifiers other than the target rectifier to a fifth voltage; and in a second time period, turn off the third switching transistor and the fourth switching transistor, control the target rectifier not to output a voltage, and adjust the sum of the output voltages of the rectifiers other than the target rectifier to a total voltage output by the power conversion circuit during normal operation, wherein
the first time period is a time period in which a current flows from an input positive end to an input negative end of the target rectifier, the second time period is a time period in which a current flows from the input negative end to the input positive end of the target rectifier, the fourth voltage is less than the output voltage of the target rectifier during normal operation, and a sum of the fourth voltage and the fifth voltage is equal to the total voltage output by the power conversion circuit during normal operation.

5. The circuit according to claim 3, wherein the control unit is specifically configured to:
when it is determined that the second diode in the target rectifier is short-circuited, turn off the first switching transistor and the second switching transistor; in a first time period, turn off the third switching transistor and the fourth switching transistor, control the target rectifier not to output a voltage, and adjust the sum of the output voltages of the rectifiers other than the target rectifier to a total voltage output by the power conversion circuit during normal operation; and in a second time period, turn on the third switching transistor and the fourth switching transistor, adjust the output voltage of the target rectifier to a sixth voltage, and adjust the sum of the output voltages of the rectifiers other than the target rectifier to a seventh voltage, wherein
the first time period is a time period in which a current flows from an input positive end to an input negative end of the target rectifier, the second time period is a time period in which a current flows from the input negative end to the input positive end of the target rectifier, the sixth voltage is greater than the output voltage of the target rectifier during normal operation, and a sum of the sixth voltage and the seventh voltage is equal to the total voltage output by the power conversion circuit during normal operation.

6. The circuit according to claim 3, wherein the control unit is specifically configured to:
when it is determined that the third diode in the target rectifier is short-circuited, turn off the third switching transistor and the fourth switching transistor; in a first time period, turn off the first switching transistor and the second switching transistor, control the target rectifier not to output a voltage, and adjust the sum of the output voltages of the rectifiers other than the target rectifier to a total voltage output by the power conversion circuit during normal operation; and in a second time period, turn on the first switching transistor and the second switching transistor, adjust the output voltage of the target rectifier to an eighth voltage, and adjust the sum of the output voltages of the rectifiers other than the target rectifier to a ninth voltage, wherein
the first time period is a time period in which a current flows from an input positive end to an input negative end of the target rectifier, the second time period is a time period in which a current flows from the input negative end to the input positive end of the target rectifier, the eighth voltage is greater than the output voltage of the target rectifier during normal operation, and a sum of the eighth voltage and the ninth voltage is equal to the total voltage output by the power conversion circuit during normal operation.

7. The circuit according to claim 3, wherein the control unit is specifically configured to:
when it is determined that the fourth diode in the target rectifier is short-circuited, turn off the third switching transistor and the fourth switching transistor; in a first time period, turn on the first switching transistor and the second switching transistor, adjust the output voltage of the target rectifier to a tenth voltage, and adjust the sum of the output voltages of the rectifiers other than the target rectifier to an eleventh voltage; and in a second time period, turn off the first switching transistor and the second switching transistor, control the target rectifier not to output a voltage, and adjust the sum of the output voltages of the rectifiers other than the target rectifier to a total voltage output by the power conversion circuit during normal operation, wherein
the first time period is a time period in which a current flows from an input positive end to an input negative end of the target rectifier, the second time period is a time period in which a current flows from the input negative end to the input positive end of the target rectifier, the tenth voltage is greater than the output voltage of the target rectifier during normal operation, and a sum of the tenth voltage and the eleventh voltage is equal to the total voltage output by the power conversion circuit during normal operation.

8. The circuit according to any one of claims 1 to 7, wherein the control unit is further configured to reduce load impedance connected to the target rectifier.

9. The circuit according to any one of claims 1 to 8, wherein between every two adjacent rectifiers, an input negative end of a rectifier is connected to an input positive end of a next rectifier, an input positive end of a first rectifier is connected to a power supply positive end of the alternating current power supply, an input negative end of a last rectifier is connected to a power supply negative end of the alternating current power supply, output positive ends of the rectifiers are connected to each other, and output negative ends of the rectifiers are connected to each other.

10. A power supply system, wherein the power supply system comprises N direct current-to-direct current DC-DC converters and the power conversion circuit according to any one of claims 1 to 9, and the N DC-DC converters are connected to N rectifiers in the power conversion circuit in a one-to-one correspondence; and
each of the N DC-DC converters is configured to convert a first direct current voltage output by a correspondingly connected rectifier into a second direct current voltage, wherein the first direct current voltage is greater than the second direct current voltage.
